(19) Europäisches Patentamt
European Patent Office
Office européen des brevets

(11) **EP 3 904 836 B1**

(12) **EUROPÄISCHE PATENTSCHRIFT**

(45) Veröffentlichungstag und Bekanntmachung des Hinweises auf die Patenterteilung:
**17.05.2023 Patentblatt 2023/20**

(21) Anmeldenummer: **21154472.1**

(22) Anmeldetag: **01.02.2021**

(51) Internationale Patentklassifikation (IPC):
**G01D 5/20** (2006.01)

(52) Gemeinsame Patentklassifikation (CPC):
**G01D 5/2053; G01D 5/206;** G01D 2205/90

(54) **INDUKTIVE POSITIONSMESSEINRICHTUNG**

INDUCTIVE POSITION MEASUREMENT DEVICE

DISPOSITIF INDUCTIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2020 DE 102020205398**

(43) Veröffentlichungstag der Anmeldung:
**03.11.2021 Patentblatt 2021/44**

(73) Patentinhaber: **Dr. Johannes Heidenhain GmbH 83301 Traunreut (DE)**

(72) Erfinder:
• **TIEMANN, Marc Oliver**
**83329 Waging am See (DE)**
• **HEUMANN, Martin**
**83278 Traunstein (DE)**
• **FRANK, Alexander**
**83278 Traunstein (DE)**

(56) Entgegenhaltungen:
**EP-A1- 1 014 041      DE-A1-102012 223 037
US-A1- 2018 274 949      US-A1- 2019 316 936**

**Beschreibung**

**GEBIET DER TECHNIK**

Die Erfindung betrifft eine induktive Positions-messeinrichtung zur Positionsbestimmung eines Abtas-telements relativ zu einem Skalenelement sowohl in einer ersten Richtung als auch in einer zweiten Richtung gemäß dem Anspruch 1.

Induktive Positionsmesseinrichtungen werden beispielsweise als Winkelmessgeräte zur Bestimmung der Winkelposition zweier relativ zueinander drehbarer Maschinenteile verwendet. Bei induktiven Positionsmesseinrichtungen sind häufig Erregerleitungen und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches mit dem Rotor des Winkelmessgeräts drehfest verbunden ist. Wenn an den Erregerleitungen ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Häufig werden derartige induktive Positionsmesseinrichtungen als Messgeräte für elektrische Antriebe, zur Bestimmung der Relativbewegung beziehungsweise der Relativlage von entsprechenden Maschinenteilen eingesetzt. In diesem Fall werden die erzeugten Winkelpositionswerte einer Folgeelektronik zur Ansteuerung der Antriebe über eine entsprechende Schnittstellenanordnung zugeführt. In manchen Anwendungen besteht der Wunsch, dass nicht nur Winkelpositionswerte erzeugt werden sollen, sondern auch Positionswerte für eine Verschiebung beziehungsweise für einen Versatz in axialer Richtung.

Ebenso sind Positionsmesseinrichtungen bekannt, durch die ein zweidimensionales Messen von Positionen in einer Ebene möglich ist.

**STAND DER TECHNIK**

In der DE 10 2012 223 037 A1 der Anmelderin wird eine induktive Positionsmesseinrichtung beschrieben, mit der sowohl Winkelpositionen als auch ein axialer Versatz bestimmbar ist. Der axiale Versatz oder die axiale Lage wird mit Hilfe einer umlaufenden Nut zwischen zwei Teilungsspuren ermittelt. Durch eine derartige Positionsmesseinrichtung kann der axiale Versatz nur über einen vergleichsweise kleinen Messweg bestimmt werden.

Die US 2019/0316936 A1 sowie die EP 1 014 041 A1 offenbaren jeweils eine induktive Positionsmesseinrichtung, die eine Mehrzahl von Spuren aufweist, die in einem vorbestimmten Abstand in einer Richtung, die orthogonal zur Messrichtung orientiert ist, angeordnet sind. Durch Abtastung dieser Spuren können Positionen entlang einer Messrichtung als Absolutwerte bestimmt werden.

**ZUSAMMENFASSUNG DER ERFINDUNG**

Der Erfindung liegt die Aufgabe zugrunde eine vergleichsweise genaue und kostengünstige induktive Positionsmesseinrichtung zu schaffen, durch die eine Bestimmung von Positionen in zwei Richtungen ermöglicht ist.

Diese Aufgabe wird erfindungsgemäß durch die Merkmale des Anspruches 1 gelöst.

Die induktive Positionsmesseinrichtung weist ein Abtastelement und ein Skalenelement auf. Die Positionsmesseinrichtung ist dazu eingerichtet Positionen des Abtastelements relativ zum Skalenelement sowohl in einer ersten Richtung als auch in einer zweiten Richtung zu bestimmen.

Das Skalenelement umfasst Teilungsstrukturen, welche entlang der ersten Richtung aneinandergereiht sind.

Die Teilungsstrukturen weisen entlang einer zweiten Richtung einen periodischen Verlauf auf mit einer zweiten Periodenlänge. Das Abtastelement umfasst eine erste Empfängerspur, eine zweite Empfängerspur und eine dritte Empfängerspur sowie mindestens eine Erregerleitung. Jede der drei Empfängerspuren weist jeweils zwei Empfängerleiterbahnen auf, die entlang der ersten Richtung einen periodischen Verlauf aufweisen mit einer ersten Periodenlänge Px. Die drei Empfängerspuren sind in der zweiten Richtung zueinander versetzt angeordnet.

Die erste Richtung kann beispielsweise eine Umfangsrichtung beziehungsweise eine Tangentialrichtung sein. In diesem Fall kann eine Winkelstellung des Skalenelements relativ zum Abtastelement bezogen auf eine Dreh- oder Schwenkbewegung um eine (Dreh-) Achse durch die Positionsbestimmung in der ersten Richtung gemessen werden. Die zweite Richtung kann dann insbesondere orthogonal zur ersten Richtung orientiert sein, beispielsweise parallel zur (Dreh-) Achse, um welche das Skalenelement relativ zum Abtastelement drehbar ist.

Alternativ kann die Positionsmesseinrichtung auch so ausgestaltet sein, dass eine zwei-dimensionale Positionsbestimmung in einer Ebene möglich ist, wobei vorzugsweise die erste Richtung in der Ebene orthogonal zur zweiten Richtung orientiert ist. In diesem Fall kann dann das Skalenelement als eine ebene Platte ausgestaltet sein.

Üblicherweise sind das Abtastelement und das Skalenelement einander gegenüber liegend angeordnet und durch einen Luftspalt, der sich beispielsweise in axialer oder radialer Richtung erstreckt, voneinander beabstandet. Häufig sind die Empfängerleiterbahnen so angeordnet, dass diese einen Phasenversatz (z.B. einen Phasenversatz von 90°) zueinander aufweisen.

Erfindungsgemäß ist die erste Empfängerspur relativ zur dazu benachbarten zweiten Empfängerspur um einen ersten Spurversatz Pz12 in der zweiten Richtung versetzt angeordnet, wobei der Spurversatz Pz12 ungleich dem n-fachen der zweiten Periodenlänge Dz ist, mit n als natürlicher Zahl, also Pz12 ≠ n·Dz.

Somit ist ausgeschlossen, dass zwei Empfängerspuren in der zweiten Richtung um die zweite Periodenlänge oder um ein Vielfaches der zweiten Periodenlänge zueinander versetzt angeordnet sind.

Zudem ist vorteilhafterweise die zweite Empfängerspur relativ zur dritten Empfängerspur um einen zweiten Spurversatz Pz23 in der zweiten Richtung z versetzt angeordnet, wobei der zweite Spurversatz Pz23 ungleich dem n-fachen der zweiten Periodenlänge Dz ist, mit n als natürlicher Zahl, also Pz23 ≠ n·Dz.

Die Betrachtungen für einen jeweiligen Spurversatz Pz12, Pz23 beziehen sich auf die Mittenabstände von entsprechenden Empfängerspuren bezogen auf ausschließlich die zweite Richtung.

Zusätzlich zu den mindestens drei Empfängerspuren können auch noch eine oder mehrere weitere Empfängerspuren vorgesehen sein. Beispielsweise um eine Verdrehung des Abtastelements relativ zum Skalenelement zu detektieren (Moire-Fehler-Detektion). In diesem Fall kann dann eine zusätzliche Empfängerspur auch gleich dem n-fachen der zweiten Periodenlänge beabstandet zu einer der mindestens drei Empfängerspuren angeordnet sein.

Mit Vorteil ist der erste Spurversatz Pz12 oder der zweite Spurversatz Pz23 gleich dem n-fachen der zweiten Periodenlänge Dz geteilt durch eine weitere natürliche Zahl m, also

$$Pz12 = n \cdot Dz/m, \text{ mit } n \neq m,$$

oder

$$Pz23 = n \cdot Dz/m, \text{ mit } n \neq m.$$

In weiterer Ausgestaltung der Erfindung ist die weitere natürliche Zahl m gleich drei, also

$$Pz12 = n \cdot Dz/3, \text{ mit } n \neq 3,$$

oder

$$Pz23 = n \cdot Dz/3, \text{ mit } n \neq 3.$$

Vorteilhafterweise ist der erste Spurversatz Pz12 gleich groß wie der zweite Spurversatz Pz23, also

$$Pz12 = Pz23$$

Mit Vorteil sind die Teilungsstrukturen entlang der ersten Richtung periodisch aneinandergereiht mit einer Teilungsperiode Dx, wobei die Teilungsperiode Dx eine Länge aufweist, die ähnlich groß ist wie die erste Periodenlänge Px. Insbesondere gilt:

$$0{,}75 \cdot Dx \leq Px \leq 1{,}25 \cdot Dx,$$

oder

$$0{,}90 \cdot Dx \leq Px \leq 1{,}10 \cdot Dx,$$

oder

$$Dx = Px.$$

Unter einem periodischen Verlauf in Bezug auf die Teilungsstrukturen beziehungsweise in Bezug auf die Empfängerleiterbahnen sind nach einem festen Abstand im Raum wiederholende Muster (räumlich periodisch) zu verstehen. Mit Vorteil sind die Teilungsstrukturen beziehungsweise die Empfängerleiterbahnen so ausgestaltet, dass diese gekrümmte beziehungsweise geschwungene Verläufe aufweisen und insbesondere keine geradlinigen Abschnitte.

Gemäß einer Weiterbildung der Erfindung weisen die Teilungsstrukturen entlang der zweiten Richtung einen sinusförmigen beziehungsweise einen sinusartigen Verlauf auf. Demnach würde eine gedachte Abszisse der zugehörigen Sinus-Linien für die Teilungsstrukturen parallel zur zweiten Richtung verlaufen.

In weiterer Ausgestaltung der Erfindung sind die Teilungsstrukturen als Stege und Lücken beziehungsweise Nuten ausgebildet. Die Länge eines Steges und die Länge einer Lücke, jeweils in der ersten Richtung, addieren sich zu einer Teilungsperiode Dx beziehungsweise zur Länge einer Teilungsstruktur. Vorteilhafterweise kann innerhalb einer Teilungsperiode Dx die Länge des Steges größer sein als die Länge der Lücke.

Mit Vorteil weisen die Empfängerleiterbahnen entlang der ersten Richtung einen sinusförmigen beziehungsweise einen sinusartigen Verlauf auf.

Vorteilhafterweise ist das Skalenelement als ein, insbesondere rotationssymmetrischer, Körper ausgestaltet mit einer gekrümmten Fläche (Mantelseite, konvexe Außenfläche oder konkave Innenfläche), an der sich die Teilungsstrukturen befinden, wobei das Skalenelement relativ zum Abtastelement um eine Achse drehbar ist, welche parallel zur zweiten Richtung verläuft, wobei zudem die erste Richtung in Umfangsrichtung verläuft beziehungsweise in Umfangsrichtung orientiert ist. Alternativ kann aber auch die Achse parallel zur ersten Richtung verlaufen, wobei dann die zweite Richtung in Umfangsrichtung verläuft.

In weiterer Ausgestaltung der Erfindung ist das Skalenelement als ein zylindrischer, insbesondere hohlzylindrischer, Körper ausgestaltet.

Es können die Teilungsstrukturen entlang der zweiten Richtung unterschiedliche Abstände zur Achse aufweisen. Beispielsweise kann das Skalenelement als ein konischer Körper oder als ein balliger Körper (mit einer fassartigen Mantelkontur) ausgestaltet sein und sich die Teilungsstrukturen an den konischen oder balligen Flächen befinden. Bei dieser Bauweise würde eine relative Positionsänderung zwischen dem Abtastelement und dem Skalenelement eine Veränderung der Signalamplitude mit sich bringen, welche dann zusätzlich als Information für die Position bezüglich der zweiten Richtung dienen könnte.

Vorteilhafte Ausbildungen der Erfindung entnimmt man den abhängigen Ansprüchen.

Weitere Einzelheiten und Vorteile der erfindungsgemäßen induktiven Positionsmesseinrichtung ergeben sich aus der nachfolgenden Beschreibung eines Ausführungsbeispiels anhand der beiliegenden Figuren.

**KURZE BESCHREIBUNG DER ZEICHNUNGEN**

Figur 1    eine perspektivische Ansicht auf ein Skalenelement,

Figur 2    eine Draufsicht auf ein Abtastelement,

Figur 3    eine Detailansicht auf das Skalenelement,

Figur 4    eine Detailansicht auf das Skalenelement zusammen mit dem Abtastelement.

**BESCHREIBUNG DER AUSFÜHRUNGSFORMEN**

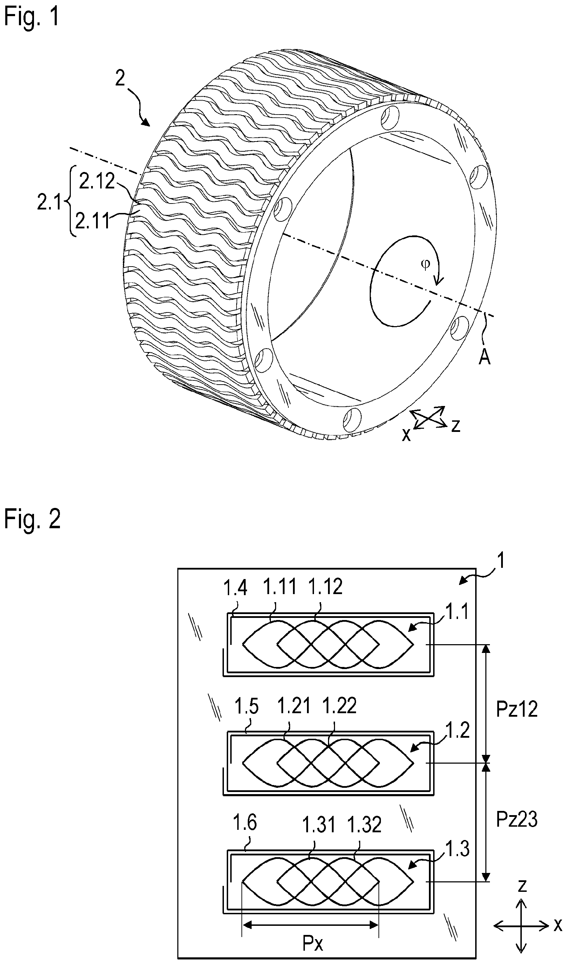

Die Erfindung wird anhand einer Positionsmesseinrichtung beschrieben, welche sowohl zur Erfassung einer Position in einer ersten Richtung x (entspricht einer Winkelposition φ) als auch einer Position in einer zweiten Richtung z zwischen einem Abtastelement 1 (Figur 2) und einem relativ um eine Achse A drehbaren Skalenelement 2 beziehungsweise einer Skala bestimmt ist. Die Achse A ist parallel zur zweiten Richtung z orientiert. Somit kann die erste Richtung x auch als die Umfangsrichtung definiert werden.

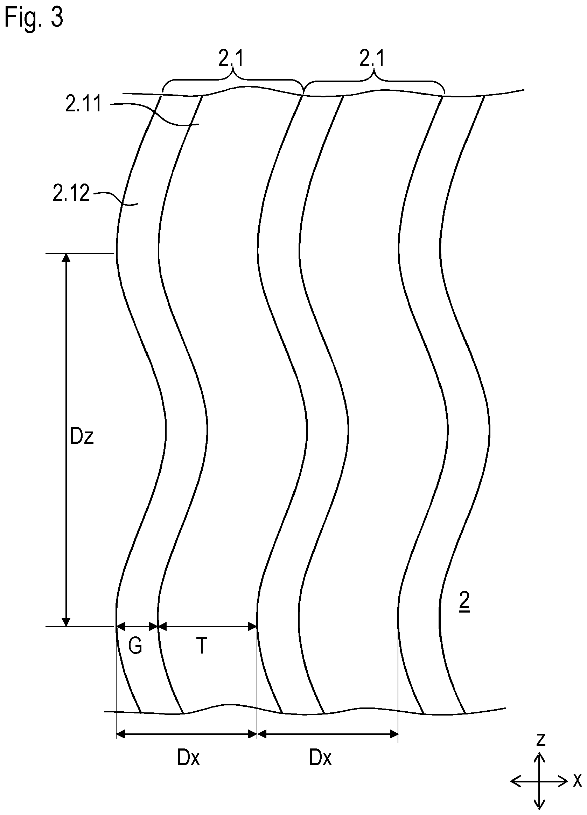

In der Figur 1 ist das Skalenelement 2 und in der Figur 3 ein vergrößerter Teilausschnitt des Skalenelements 2 gezeigt. Hier ist das Skalenelement 2 aus einem Aluminium-Werkstoff hergestellt. Das Skalenelement 2 ist in diesem Ausführungsbeispiel als ein Hohlzylinder beziehungsweise Ring mit der Achse A ausgestaltet, an dessen Mantelseite sich Teilungsstrukturen 2.1 befinden. Die Teilungsstrukturen 2.1 umfassen im vorgestellten Beispiel Stege 2.11 und dazwischen liegende Lücken 2.12 oder Nuten. Die Teilungsstrukturen 2.1 bestehen demnach jeweils aus einer bezüglich der ersten Richtung x beziehungsweise aus einer bezüglich der Umfangsrichtung periodischen Abfolge von alternierend angeordneten Stegen 2.11 und Lücken 2.12. Die Teilungsperiode Dx (Figur 3) der Teilungsstrukturen 2.1 ergibt sich aus der Summe der Länge T eines der Stege 2.11 und der Länge G einer der Lücken 2.12, wobei sich die Längen T, G in der ersten Richtung x beziehungsweise in Umfangsrichtung erstrecken.

$$Dx = G+T$$

Die Längen T sind für alle Stege 2.11 gleich groß wie auch jeweils die Längen G der Lücken 2.12. Zudem gilt im vorgestellten Ausführungsbeispiel, dass innerhalb einer Teilungsperiode Dx die Länge T des Steges 2.11 größer ist als die Länge G der Lücke (T > G).

Die Teilungsstrukturen 2.1, also die Stege 2.11 und die dazwischen liegenden Lücken 2.12, weisen einen räumlich periodischen Verlauf auf, der bezüglich (entlang) der zweiten Richtung z im Wesentlichen sinusförmig beziehungsweise sinusartig ausgestaltet ist. Dabei verläuft die Abszisse der zugehörigen Sinus-Linien entlang einer Linie parallel zur Achse A beziehungsweise in der zweiten Richtung z. Im vorgestellten Ausführungsbeispiel durchläuft jede der Teilungsstrukturen 2 mehrere volle Sinusperioden, wobei jede der Teilungsstrukturen 2 eine zweite Periodenlänge Dz aufweist.

Das Abtastelement 1 gemäß der Figur 2 ist als eine Leiterplatte, welche mehrere Lagen aufweist, ausgeführt und dient zur Abtastung des Skalenelements 2. Das gezeigte Abtastelement 1 weist eine erste Empfängerspur 1.1, eine zweite Empfängerspur 1.2 und eine dritte Empfängerspur 1.3 auf. Jede der drei Empfängerspuren 1.1, 1.2, 1.3 umfasst jeweils zwei Empfängerleiterbahnen 1.11, 1.12, 1.21, 1.22, 1.31, 1.32. Weiterhin umfasst das Abtastelement 1 Erregerleitungen 1.4, 1.5, 1.6, die die Empfängerleiterbahnen 1.11, 1.12, 1.21, 1.22, 1.31, 1.32 umschließen. Zudem verlaufen die Empfängerleiterbahnen 1.11, 1.12, 1.21, 1.22, 1.31, 1.32 auf unterschiedlichen Ebenen mit Durchkontaktierungen, so dass an Kreuzungspunkten unerwünschte Kurzschlüsse vermieden werden. Im gezeigten Ausführungsbeispiel sind zumindest zwei Lagen in dem Leiterplattenaufbau vorgesehen. Die Empfängerleiterbahnen 1.11, 1.12, 1.21, 1.22, 1.31, 1.32 weisen einen räumlich periodischen Verlauf auf, der im Wesentlichen sinusförmig beziehungsweise sinusartig ausgestaltet ist. Dabei verläuft die Abszisse der zugehörigen Sinus-Linien entlang einer Linie parallel zur ersten Richtung x. Der Spurversatz Pz12, Pz23 zwischen benachbarten Empfängerspuren 1.1, 1.2, 1.3 entspricht dem Abstand der zugehörigen Abszissen, also den Mittenabständen. Im vorgestellten Ausführungsbeispiel durchläuft jede der Empfängerleiterbahnen 1.11, 1.12, 1.21, 1.22, 1.31, 1.32 eine volle Sinusperiode, welche eine erste Periodenlänge Px aufweist. Im vorgestellten Ausführungsbeispiel gilt, dass die erste Periodenlänge Px gleich groß ist wie die Teilungsperiode Dx:

$$Px = Dx = T+G$$

Empfängerleiterbahnen 1.11, 1.12, 1.21, 1.22, 1.31, 1.32, die zur gleichen Empfängerspur 1.1, 1.2, 1.3 gehören, sind relativ zueinander entlang der ersten Richtung x versetzt angeordnet. Im vorgestellten Ausführungsbeispiel sind diejenigen Empfängerleiterbahnen 1.11, 1.12; 1.21, 1.22; 1.31, 1.32, die sich in ein und derselben Empfängerspur 1.1, 1.2, 1.3 befinden (also die Empfängerleiterbahnen 1.11, 1.12 der ersten Empfängerspur 1.1, die Empfängerleiterbahnen 1.21, 1.22 der zweiten Empfängerspur 1.2 und die Empfängerleiterbahnen 1.31, 1.32 der dritten Empfängerspur 1.3), um 1/4 der vollen Sinusperiode (um $\pi/2$ oder 90° entlang der ersten Richtung x) zueinander versetzt angeordnet. Die Empfängerleiterbahnen 1.11, 1.12, 1.21, 1.22, 1.31, 1.32 sind elektrisch so verschaltet, dass diese letztlich bezüglich der Positionsbestimmung in der ersten Richtung x um 90° phasenversetzte Signale liefern können.

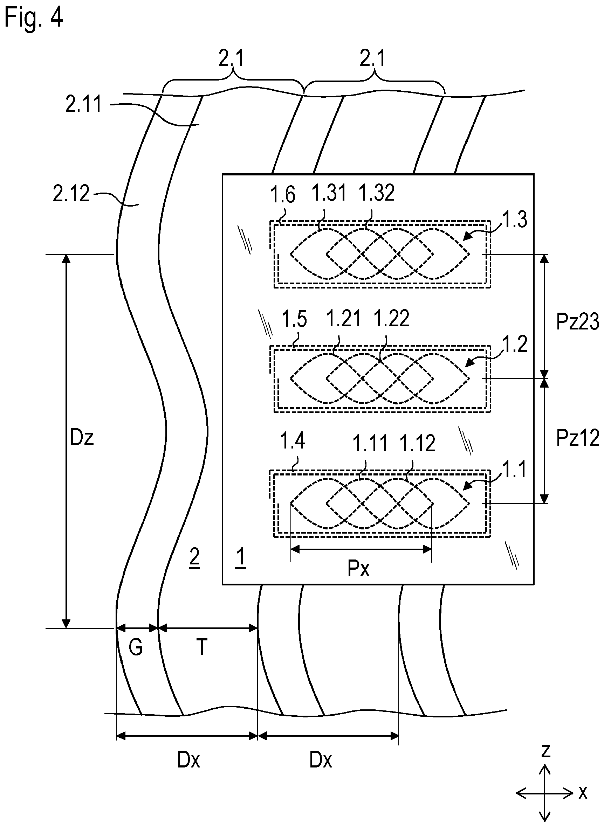

Die erste Empfängerspur 1.1 ist zur benachbarten zweiten Empfängerspur 1.2 in der zweiten Richtung z um einen ersten Spurversatz Pz12 versetzt angeordnet. Ebenso ist die zweite Empfängerspur 1.2 zur benachbarten dritten Empfängerspur 1.3 in der zweiten Richtung z um einen zweiten Spurversatz Pz23 versetzt angeordnet. Im vorgestellten Ausführungsbeispiel sind der erste Spurversatz Pz12 zwischen der ersten Empfängerspur 1.1 und zweiten Empfängerspur 1.2 sowie der zweite Spurversatz Pz23 zwischen der zweiten Empfängerspur 1.2 und der dritten Empfängerspur 1.3 gleich groß (Pz12 = Pz23). Im Übrigen entsprechen, wie in den Figuren 2 und 4 dargestellt, der erste Spurversatz Pz12 und der zweite Spurversatz Pz23 den Abständen zwischen den Mitten (Mittenabstände) der Empfängerspuren 1.1, 1.2, 1.3 in der zweiten Richtung z.

Benachbarte Empfängerspuren 1.1, 1.2, 1.3 sind also in der zweiten Richtung z jeweils um einen Spurversatz Pz12, Pz23 zueinander versetzt angeordnet. Im vorgestellten Ausführungsbeispiel beträgt sowohl der erste Spurversatz Pz12 als auch der zweite Spurversatz Pz23 ein Drittel der zweiten Periodenlänge Dz, also:

$$Pz12 = Dz/3 = Pz23.$$

Im zusammengebauten Zustand gemäß der Figur 4 stehen sich das Abtastelement 1 und das Skalenelement 2 mit radialem Abstand beziehungsweise radialem Luftspalt gegenüber, so dass bei einer Relativdrehung zwischen dem Skalenelement 2 und dem Abtastelement 1 in den Empfängerleiterbahnen 1.11, 1.12, 1.21, 1.22, 1.31, 1.32 ein von der jeweiligen Winkelposition abhängiges Signal durch Induktionseffekte erzeugbar ist. Voraussetzung für die Bildung von entsprechenden Signalen ist, dass die Erregerleitungen 1.4, 1.5, 1.6 ein zeitlich wechselndes elektromagnetisches Erregerfeld im Bereich der abgetasteten Teilungsstrukturen erzeugen. Im dargestellten Ausführungsbeispiel sind die Erregerleitungen 1.4, 1.5, 1.6 als mehrere planar-parallele stromdurchflossene Einzel-Leiterbahnen ausgebildet. Das Abtastelement 1 weist eine elektronische Schaltung, die beispielsweise einen ASIC-Baustein umfasst, auf. Diese elektronische Schaltung des Abtastelements 1 arbeitet nicht nur als Auswerteelement, sondern auch als Erregerkontrollelement, unter dessen Kontrolle der Erregerstrom erzeugt wird, welcher dann durch die Erregerleitungen 1.4, 1.5, 1.6 beziehungsweise durch die Einzel-Leiterbahnen fließt. Somit werden die Erregerleitungen 1.4, 1.5, 1.6 durch ein und dasselbe Erregerkontrollelement bestromt.

Werden die Erregerleitungen 1.4, 1.5, 1.6 bestromt, so bildet sich um die jeweilige Erregerleitung 1.4, 1.5, 1.6 ein schlauch- bzw. zylinderförmig orientiertes elektromagnetisches Feld aus. Die Feldlinien des resultierenden elektromagnetischen Feldes verlaufen in Form konzentrischer Kreise um die Erregerleitungen 1.4, 1.5, 1.6, wobei die Richtung der Feldlinien in bekannter Art und Weise von der Stromrichtung in den Erregerleitungen 1.4, 1.5, 1.6 abhängt. Im Bereich der Stege 2.11 werden Wirbelströme induziert, so dass eine von der Winkelstellung $\varphi$ abhängige Modulation des Feldes erreicht wird. Entsprechend kann durch die Empfängerspuren 1.1, 1.2, 1.3 jeweils die relative Winkelstellung $\varphi$ gemessen werden. Die Paare von Empfängerleiterbahnen 1.11, 1.12, 1.21, 1.22, 1.31, 1.32 sind innerhalb ihrer Empfängerspur 1.1, 1.2, 1.3 so angeordnet, dass diese jeweils um 90° phasenversetzte Signale liefern, so dass auch eine Bestimmung der Drehrichtung vorgenommen werden kann. Die so ermittelte Winkelstellung $\varphi$ einer einzigen Empfängerspur 1.1, 1.2, 1.3 weist aber im Allgemeinen unerwünscht große Fehler auf, die durch die Messung mit Hilfe der weiteren Empfängerspuren 1.1, 1.2, 1.3, beispielsweise durch Mittelwertbildung, korrigiert beziehungsweise eliminiert werden.

Durch die Empfängerspuren 1.1, 1.2, 1.3 wird aber nicht nur die relative Position in der ersten Richtung x beziehungsweise die Winkelstellung $\varphi$, sondern auch die relative Position in der zweiten Richtung z zwischen dem Skalenelement 2 und dem Abtastelement 1 detektiert. Zu diesem Zweck werden die jeweiligen Einzelmesswerte der Empfängerspuren 1.1, 1.2, 1.3 jeweils mit der (korrigierten) Winkelstellung $\varphi$, die aus allen drei Empfängerspuren 1.1, 1.2, 1.3 bestimmt wird, verknüpft.

Somit kann durch die Positionsmesseinrichtung eine relative Position des Skalenelements 2 in der zweiten Richtung z, welche parallel zur Achse A orientiert ist, detektiert werden unter Verwendung derjenigen Erregerleitungen 1.4, 1.5, 1.6 und Empfängerspuren 1.1, 1.2, 1.3, mit deren Hilfe letztlich auch die Winkelstellung $\varphi$ detektierbar ist.

**Patentansprüche**

1. Induktive Positionsmesseinrichtung, die ein Abtastelement (1) und ein Skalenelement (2) aufweist, wobei die Positionsmesseinrichtung dazu eingerichtet ist Positionen des Abtastelements (1) relativ zum Skalenelement (2) in einer ersten Richtung (x) und in einer zweiten Richtung (z) zu bestimmen, wobei

   - das Skalenelement (2) Teilungsstrukturen (2.1) umfasst, welche entlang der ersten Richtung (x) aneinandergereiht sind, wobei die Teilungsstrukturen (2.1) entlang der zweiten Richtung (z) einen periodischen Verlauf mit einer zweiten Periodenlänge (Dz) aufweisen, und
   - das Abtastelement (1) eine erste Empfängerspur (1.1), eine zweite Empfängerspur (1.2) und eine dritte Empfängerspur (1.3) umfasst sowie eine Erregerleitung (1.4, 1.5, 1.6), wobei jede der drei Empfängerspuren (1.1, 1.2, 1.3) jeweils zwei Empfängerleiterbahnen (1.11, 1.12, 1.21, 1.22, 1.31, 1.32) aufweist, die entlang der ersten Richtung (x) einen periodischen Verlauf aufweisen mit einer ersten Periodenlänge (Px), wobei die Empfängerspuren (1.1, 1.2, 1.3) in der zweiten Richtung (z) zueinander versetzt angeordnet sind, wobei die erste Empfängerspur (1.1) relativ zur zweiten Empfängerspur (1.2) um einen ersten Spurversatz (Pz12) in der zweiten Richtung (z) versetzt angeordnet ist und der Spurversatz (Pz12) ungleich dem n-fachen der zweiten Periodenlänge (Dz) ist, mit n als natürlicher Zahl, also

$$Pz12 \neq n \cdot Dz.$$

2. Induktive Positionsmesseinrichtung gemäß dem Anspruch 1, wobei die zweite Empfängerspur (1.2) relativ zur dritten Empfängerspur (1.3) um einen zweiten Spurversatz (Pz23) in der zweiten Richtung (z) versetzt angeordnet ist und der zweite Spurversatz (Pz23) ungleich dem n-fachen der zweiten Periodenlänge (Dz) ist, mit n als natürlicher Zahl, also

$$Pz23 \neq n \cdot Dz.$$

3. Induktive Positionsmesseinrichtung gemäß dem Anspruch 1 oder 2, wobei der erste Spurversatz (Pz12) oder der zweite Spurversatz (Pz23) gleich dem n-fachen der zweiten Periodenlänge (Dz) geteilt durch eine weitere natürliche Zahl m ist, also

$$Pz12 = n \cdot Dz/m, \text{ mit } n \neq m,$$

oder

$$Pz23 = n \cdot Dz/m, \text{ mit } n \neq m.$$

4. Induktive Positionsmesseinrichtung gemäß dem Anspruch 3, wobei die weitere natürliche Zahl m gleich drei ist, also

$$Pz12 = n \cdot Dz/3, \text{ mit } n \neq 3,$$

oder

$$Pz23 = n \cdot Dz/3, \text{ mit } n \neq 3.$$

5. Induktive Positionsmesseinrichtung gemäß einem der vorhergehenden Ansprüche, wobei die erste Empfängerspur (1.1) relativ zur zweiten Empfängerspur (1.2) um einen ersten Spurversatz (Pz12) in der zweiten Richtung (z) versetzt und die zweite Empfängerspur (1.2) relativ zur dritten Empfängerspur (1.3) um einen zweiten Spurversatz (Pz23) in der zweiten Richtung (z) versetzt angeordnet sind, wobei der erste Spurversatz (Pz12) gleich groß ist wie der zweite Spurversatz (Pz23), also

$$Pz12 = Pz23$$

6. Induktive Positionsmesseinrichtung gemäß einem der vorhergehenden Ansprüche, wobei die Teilungsstrukturen (2.1) entlang der ersten Richtung (x) periodisch aneinandergereiht sind mit einer Teilungsperiode (Dx), wobei die Teilungsperiode (Dx) eine Länge aufweist, die ähnlich oder genau so groß ist wie die erste Periodenlänge (Px), so dass gilt

$$0,75 \cdot Dx \leq Px \leq 1,25 \cdot Dx$$

7. Induktive Positionsmesseinrichtung gemäß einem der vorhergehenden Ansprüche, wobei die Teilungsstrukturen (2.1) entlang der zweiten Richtung (z) einen sinusförmigen Verlauf aufweisen.

8. Induktive Positionsmesseinrichtung gemäß einem der vorhergehenden Ansprüche, wobei die Teilungsstrukturen (2.1) als Stege (2.11) und Lücken (2.12) ausgebildet sind.

9. Induktive Positionsmesseinrichtung gemäß einem der vorhergehenden Ansprüche, wobei die Empfängerleiterbahnen (1.11, 1.12, 1.21, 1.22, 1.31, 1.32) entlang der ersten Richtung (x) einen sinusförmigen Verlauf aufweisen.

10. Induktive Positionsmesseinrichtung gemäß einem der vorhergehenden Ansprüche, wobei das Skalenelement (2) relativ zum Abtastelement (1) um eine Achse (A) drehbar ist, welche parallel zur zweiten Richtung (z) verläuft und die erste Richtung (x) in Umfangsrichtung verläuft.

11. Induktive Positionsmesseinrichtung gemäß dem Anspruch 10, wobei das Skalenelement (2) als ein zylindrischer Körper ausgestaltet ist.

**Claims**

1. Inductive position measuring device having a scanning element (1) and a scale element (2), wherein the position measuring device is configured to determine positions of the scanning element (1) relative to the scale element (2) in a first direction (x) and in a second direction (z), wherein

   - the scale element (2) comprises graduation structures (2.1) which are juxtaposed along the first direction (x), wherein the graduation structures (2.1) have a periodic progression with a second period length (Dz) along the second direction (z), and
   - the scanning element (1) comprises a first receiver track (1.1), a second receiver track (1.2) and a third receiver track (1.3) and also an excitation line (1.4, 1.5, 1.6), wherein each of the three receiver tracks (1.1, 1.2, 1.3) has in each case two receiver conductor traces (1.11, 1.12, 1.21, 1.22, 1.31, 1.32) having a periodic progression with a first period length (Px) along the first direction (x), wherein the receiver tracks (1.1, 1.2, 1.3) are arranged offset with respect to one another in the second direction (z), wherein the first receiver track (1.1) is arranged offset relative to the second receiver track (1.2) by a first track offset (Pz12) in the second direction (z) and the track offset (Pz12) is not equal to n times the second period length (Dz), where n is a natural number, that is to say

$$Pz12 \neq n \cdot Dz.$$

2. Inductive position measuring device according to Claim 1, wherein the second receiver track (1.2) is arranged offset relative to the third receiver track (1.3) by a second track offset (Pz23) in the second direction (z) and the second track offset (Pz23) is not equal to n times the second period length (Dz), where n is a natural number, that is to say

$$Pz23 \neq n \cdot Dz.$$

3. Inductive position measuring device according to Claim 1 or 2, wherein the first track offset (Pz12) or the second track offset (Pz23) is equal to n times the second period length (Dz) divided by a further natural number m, that is to say

$$Pz12 = n \cdot Dz/m, \text{ where } n \neq m,$$

or

$$Pz23 = n \cdot Dz/m, \text{ where } n \neq m.$$

4. Inductive position measuring device according to Claim 3, wherein the further natural number m is equal to three, that is to say

$$Pz12 = n \cdot Dz/3,$$

where $n \neq 3$, or

$$Pz23 = n \cdot Dz/3,$$

where $n \neq 3$.

5. Inductive position measuring device according to any of the preceding claims, wherein the first receiver track (1.1) is arranged offset relative to the second receiver track (1.2) by a first track offset (Pz12) in the second direction (z) and the second receiver track (1.2) is arranged offset relative to the third receiver track (1.3) by a second track offset (Pz23) in the second direction (z), wherein the first track offset (Pz12) is equal to the second track offset (Pz23), that is to say

$$Pz12 = Pz23.$$

6. Inductive position measuring device according to any of the preceding claims, wherein the graduation structures (2.1) are juxtaposed periodically along the first direction (x) with a graduation period (Dx), wherein the graduation period (Dx) has a length which is similar or exactly equal to the first period length (Px), such that the following holds true:

$$0.75 \cdot Dx \leq Px \leq 1.25 \cdot Dx.$$

7. Inductive position measuring device according to any of the preceding claims, wherein the graduation structures (2.1) have a sinusoidal progression along the second direction (z).

8. Inductive position measuring device according to any of the preceding claims, wherein the graduation structures (2.1) are embodied as webs (2.11) and gaps (2.12).

9. Inductive position measuring device according to any of the preceding claims, wherein the receiver conductor traces (1.11, 1.12, 1.21, 1.22, 1.31, 1.32) have a sinusoidal progression along the first direction (x).

10. Inductive position measuring device according to any of the preceding claims, wherein the scale element (2) is rotatable relative to the scanning element (1) about an axis (A) extending parallel to the second direction (z) and the first direction (x) extends in a circumferential direction.

11. Inductive position measuring device according to Claim 10, wherein the scale element (2) is designed as a cylindrical body.

**Revendications**

1. Dispositif de mesure de position inductif, qui présente un élément de détection (1) et un élément de graduation (2), le dispositif de mesure de position étant adapté pour déterminer des positions de l'élément de détection (1) par rapport à l'élément de graduation (2) dans une première direction (x) et dans une deuxième direction (z),

   - l'élément de graduation (2) comprenant des structures de division (2.1) qui sont alignées le long de la première direction (x), les structures de division (2.1) présentant le long de la deuxième direction (z) une allure périodique avec une deuxième longueur de période (Dz), et
   - l'élément de détection (1) comprenant une première piste de récepteur (1.1), une deuxième piste de récepteur (1.2) et une troisième piste de récepteur (1.3) ainsi qu'une ligne d'excitation (1.4, 1.5, 1.6),
   chacune des trois pistes de récepteur (1.1, 1.2, 1.3) présentant chacune deux pistes conductrices de récepteur (1.11, 1.12, 1.21, 1.22, 1.31, 1.32) qui présentent le long de la première direction (x) une allure périodique avec une première longueur de période (Px), les pistes de récepteur (1.1, 1.2, 1.3) étant agencées en décalage les unes par rapport aux autres dans la deuxième direction (z), la première piste de récepteur (1.1) étant agencée en décalage par rapport à la deuxième piste de récepteur (1.2) d'un premier décalage de piste (Pz12) dans la deuxième direction (z) et le décalage de piste (Pz12) étant différent de n fois la deuxième longueur de période (Dz), n étant un nombre naturel, soit

$$Pz12 \neq n \cdot Dz.$$

2. Dispositif de mesure de position inductif selon la revendication 1, la deuxième piste de récepteur (1.2) étant agencée en décalage par rapport à la troisième piste de récepteur (1.3) d'un deuxième décalage de piste (Pz23) dans la deuxième direction (z) et le deuxième décalage de piste (Pz23) étant différent de n fois la deuxième longueur de période (Dz), n étant un nombre naturel, soit

$$Pz23 \neq n \cdot Dz.$$

3. Dispositif de mesure de position inductif selon la revendication 1 ou 2, le premier décalage de piste (Pz12) ou le deuxième décalage de piste (Pz23) étant égal à n fois la deuxième longueur de période (Dz) divisée par un autre nombre naturel m, soit

$$Pz12 = n \cdot Dz/m, \quad avec \; n \neq m,$$

ou

$$Pz23 = n \cdot Dz/m, \quad avec \; n \neq m.$$

4. Dispositif de mesure de position inductif selon la revendication 3, l'autre nombre naturel m étant égal à trois, soit

$$Pz12 = n \cdot Dz/3, \quad avec \; n \neq 3,$$

ou

$$Pz23 = n \cdot Dz/3, \quad avec \; n \neq 3.$$

5. Dispositif de mesure de position inductif selon l'une quelconque des revendications précédentes, la première piste de récepteur (1.1) étant agencée en décalage par rapport à la deuxième piste de récepteur (1.2) d'un premier décalage de piste (Pz12) dans la deuxième direction (z) et la deuxième piste de récepteur (1.3) étant agencée en décalage par rapport à la troisième piste de récepteur (1.3) d'un deuxième décalage de piste (Pz23) dans la deuxième direction (z), le premier décalage de piste (Pz12) étant égal au deuxième décalage de piste (Pz23), soit

$$Pz12 = Pz23.$$

6. Dispositif de mesure de position inductif selon l'une quelconque des revendications précédentes, les structures de division (2.1) étant alignées périodiquement le long de la première direction (x) avec une période de division (Dx), la période de division (Dx) présentant une longueur qui est similaire ou égale à la première longueur de période (Px), de telle sorte que

$$0,75 \cdot Dx \leq Px \leq 1,25 \cdot Dx$$

7. Dispositif de mesure de position inductif selon l'une quelconque des revendications précédentes, les structures de division (2.1) présentant une allure sinusoïdale le long de la deuxième direction (z).

8. Dispositif de mesure de position inductif selon l'une quelconque des revendications précédentes, les structures de séparation (2.1) étant réalisées sous forme d'entretoises (2.11) et d'intervalles (2.12).

9. Dispositif de mesure de position inductif selon l'une quelconque des revendications précédentes, les pistes conductrices de récepteur (1.11, 1.12, 1.21, 1.22, 1.31, 1.32) présentant une allure sinusoïdale le long de la première direction (x).

10. Dispositif de mesure de position inductif selon l'une quelconque des revendications précédentes, l'élément de graduation (2) étant rotatif par rapport à l'élément de détection (1) autour d'un axe (A) qui s'étend parallèlement à la deuxième direction (z) et la première direction (x) s'étendant dans la direction circonférentielle.

11. Dispositif de mesure de position inductif selon la revendication 10, l'élément de graduation (2) étant conçu sous la forme d'un corps cylindrique.

Fig. 1

Fig. 2

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012223037 A1
- US 20190316936 A1
- EP 1014041 A1